# EUROPEAN PATENT APPLICATION

(11) **EP 4 060 593 A1**
(43) Date of publication of application: **21.09.2022**
(21) Application number: 22162466.1
(22) Date of filing: 16.03.2022
(51) Int. Cl.: G06Q 30/02, G06Q 50/16

(54) **PROPERTY VALUATION USING OBJECT IDENTIFICATION**

(30) Priority: 16.03.2021 BE 202105199
(71) Applicant: Gudrun Xpert NV, 1000 Brussel (BE)
(72) Inventor: BOSMANS, Dirk, 1000 Brussel (BE); BOSMANS, Jans, 1000 Brussel (BE)
(74) Representative: Brantsandpatents bvba

(57) **Abstract**

The present invention relates to a computer-implemented method for property valuation. The method comprises the step of receiving an address of a property. The method further comprises the step of locating said property, preferably on an interactive map. The method further comprises the step of rendering a 3D visual of said property, wherein said visual is preferably adaptable. The method further comprises the step of calculating a value of the property.

## Description

### TECHNICAL FIELD

The present invention relates to a computer-implemented method for property valuation. In particular, the invention relates to a computer-implemented method for property valuation using object identification.

### BACKGROUND

Digital valuation may be achieved by making use of open source data, so as to limit the burden of data input by the user, and maximize the number of reliable variables used for said valuation. Said data is used to calculate parameters, based on which valuation is done. Said parameters may comprise: location parameters, neighborhood parameters (e.g. type of area or street, public transport), socio-demographic parameters (e.g. average housing price, gross income), parcel parameters (e.g. number of parcels and corresponding CaPaKey, total parcel area, number of buildings on a parcel , percentage of built area on a parcel), and building parameters (listing, volume, height, roof inclination).

The problem is that the accuracy of the valuation highly depends on the reliability and correctness of the available data based on an address. For example, if the data is inaccurate, the valuation would also be inaccurate. Furthermore, parcels and buildings linked to an address are often incomplete, incorrect, or don't exist, especially in non-residential areas, and also in case of a property having multiple parcels. When an address is not found, no data can be retrieved. When an address leads to an incorrect property, incorrect data is retrieved. When a property is incomplete, incomplete data is retrieved. When a property does not have an address, no data about that property can be retrieved. In all of these scenarios, an accurate valuation cannot be obtained. Finally, in countries having more than one government e.g. Belgium, open source data given by different governments have often different conventions e.g. different units, different measurements methods, different parameters or standards. This adds an extra level of complexity, since such data need to be made uniform first.

A system and method for providing land acquisition and property development analysis services via a cloud-based platform is described in US20200043110, but this known method results in inaccurate valuations because of the use of incomplete data.

The present invention aims to resolve at least some or almost all of these problems mentioned above.

### SUMMARY OF THE INVENTION

In a first aspect, the present invention relates to a computer implemented method for property valuation, according to claim 1. Preferred embodiments of the method are provided in claims 2 to 12.

The method comprises the steps of:
a) receiving an address of a property, and
b) locating said property, preferably on an interactive map, characterized in that the method further comprises the step of:
d) rendering a 3D visual of said property, wherein said visual is preferably adaptable, and
e) calculating a value of the property.

It is an advantage of embodiments of the present invention that a compliant, fast, efficient, cost-effective, digital, and accurate valuation of said property is obtained. It is an advantage of embodiments of the present invention that the quality of a user's property portfolio (e.g. related to valuation of owned properties) is improved. It is an advantage of embodiments of the present invention that structured data about the property is obtained. It is an advantage of embodiments of the present invention that a close-to-reality visualization of said property is obtained.

The method may further comprise the step of predefining a parcel comprising said property. It is an advantage of embodiments of the present invention that the user may easily adjust the parcel.

The method may further comprise the step of translating the address to a geolocation. It is an advantage of embodiments of the present invention that a universal address is obtained.

The method may further comprise the step of locating a nearest property to said property. It is an advantage of embodiments of the present invention that in case of an incorrect or inaccurate address, a user may navigate (e.g. manually) from said incorrect address to the correct address, so as to define the property and its parcels.

The method may further comprise the step of linking two or more parcels. It is an advantage of embodiments of the present invention that a property sharing two or more parcels may be rendered as one property, according to the desire of the user.

The method may further comprise the step of redefining or removing the parcel, or adding a new parcel. It is an advantage of embodiments of the present invention that an interactive 3D map of said property is obtained. It is an advantage of embodiments of the present invention that an accurate definition of the property is obtained.

The method may further comprise the step of retrieving at least one data set about the property from at least one database. It is an advantage of embodiments of the present invention that said data is used for rendering said 3D visual. The data may comprise two data sets from two databases. The first data set comprises open source data, and the second data set comprises collected data. It is an advantage of embodiments of the present invention that the collected data compliments the open source data, so as to obtain a more accurate property valuation, since the valuation depends less on the reliability and correctness of the open source data.

The method may further comprise the step of assigning an object ID to said property. It is an advantage of embodiments of the present invention that the object ID is allows to obtain data about said property, and therefore acts as a basis for valuating said property. It is an advantage of embodiments of the present invention that the object ID enables monitoring the property.

In a second aspect, the present invention relates to a computer product for property valuation, according to claim 13. In a third aspect, the present invention relates to a computer system for property valuation, according to claim 14. In a fourth aspect, the present invention relates to use according to claim 15 of the computer implemented method according to the first aspect, for property valuation.

Further advantages of the invention and in particular of preferred embodiments, are disclosed in the detailed description below.

### DESCRIPTION OF THE FIGURES

Fig. 1 - 7 illustrate some of the method steps for valuation of a property, according to embodiments of the present invention.
Fig. 1 shows the step of receiving an address of a property, according to embodiments of the present invention.
Fig. 2 shows an interactive 3D map of the property, according to embodiments of the present invention.
Fig. 3 - 4 show the step of receiving additional parameters about the property, according to embodiments of the present invention.
Fig. 5 shows the step of calculating a value of the property, according to embodiments of the present invention.
Fig. 6 shows an example of the step of linking two or more parcels, according to embodiments of the present invention.
Fig. 7 shows a map wherein a plurality of parcels are shown, of which one or more parcels can be selected for valuation, according to embodiments of the present invention.

### DETAILED DESCRIPTION OF THE INVENTION

The present invention relates to a computer-implemented method for property valuation.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a contaminant" refers to one or more than one contaminant.

"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

In a first aspect, the present invention relates to a computer implemented method for property valuation. The method comprises the steps of:
a) receiving an address of a property, and
b) locating said property, preferably on an interactive map, characterized in that the method further comprises the step of:
d) rendering a 3D visual of said property, wherein said visual is preferably adaptable, and
e) calculating a value of the property.

In a preferred embodiment, the method uses object identification to calculate the value. For example, by rendering an adaptable 3D visual, a more accurate valuation can be obtained.

In a preferred embodiment, after receiving the address, the method is done automatically. The method may still allow some interaction, for example receiving further input to further improve the quality of the valuation. This allows efficient, cost effective, digital, and accurate valuation. A user with many properties can also easily monitor the valuation of their properties, and the 3D visual provides a good overview of each property e.g. very close to reality, without going into details of each property.

In a preferred embodiment, a user provides the address to a valuation system, for example at least one address, wherein said system performs the rendering, locating, and calculating steps.

In a preferred embodiment, locating said property may be done on a map, for example a 2D map. After rendering the 3D visual, said 2D map becomes a 3D map. Rendering may be done automatically after the defining the parcel. For example, said map may be shown on a computer or a phone screen. A software platform is configured to display data related to the property such as said map, or to accept an input from a user.

In a preferred embodiment, the parcel may be defined by at least an area wherein said property is encompassed. For example, the property may comprise a building, a garden, a parking space, and any other spaces. The property may be a residential or a non-residential property.

In a preferred embodiment, the method may further comprise the step of predefining the parcel. For example, before the users starts using the software platform. This is advantageous in helping the user to easily adjust properties of the parcel e.g. the dimensions of the parcel e.g. by redrawing the parcel.

In a preferred embodiment, the method may further comprise the step of translating the address to a geolocation. For example, the address may initially be comprising textual data e.g. a street name, a street number, and a city name, and may be translated into a corresponding xy-coordinates or a 2D map. This allows to obtain a universal address format.

In a preferred embodiment, the method may further comprise the step of locating a nearest property to said property. For example, in case the received address does not correspond to a property (e.g. due to an incorrect, inaccurate, or incomplete address), the nearest property is located. From thereon, the user may navigate from said incorrect address to the correct address, so as to define the parcel, for example by drawing boundaries of said parcel on a screen e.g. a phone or a computer screen.

In a preferred embodiment, the user has a plurality of properties and parcels e.g. a portfolio of properties, of which the method allows to valuate each of them, or all of them simultaneously.

In a preferred embodiment, the method may further comprise the step of linking two or more parcels. This is done by one of two techniques. The first technique is referred to as a propagation technique. For example, in case a building is situated on two or more parcels, such a property may automatically be rendered as one property. Subsequently, the linked parcels may be merged into one parcel, according to the desire of the user. Alternatively, in the second technique, said linking is based on aerial data e.g. aerial photos. For example, said technique detects fences, hedges, to determine parcels of properties. Thereafter, the method makes a suggestion to the user whether said two parcels are to be linked (for example in an additional method step).

In a preferred embodiment, the method may further comprise the step of redefining or removing the parcel, or adding a new parcel. For example, in case the parcel is outdated, or for example in case a parcel does not exist anymore, or that the parcel is incomplete or incorrect. The method may further comprise the step of adding or removing buildings on parcels, in case buildings no longer exist or are newly built. This results in an interactive 3D map, which allows the user to facilitate in creating an accurate definition of the property or e.g. of the plurality of properties owned by the user.

In a preferred embodiment, the method may further comprise the step of retrieving at least one data set about the property from at least one database. The data may comprise two data sets from two databases. The first data set comprises open source data, and the second data set comprises collected data. This reduces the dependency on open source data, and increases the accuracy of property valuation. Said data is used for rendering said 3D visual.

The open source data may comprise: socio-demographics, and/or neighborhood data, and/or neighboring properties, and/or neighboring parcels. The collected data may comprise: detailed descriptions of properties e.g. in a region or a country, for example collected over a long period of time e.g. many years. The collected data may further comprise aerial data (e.g. photos). Part of said data may subsequently be used to calculate valuation.

In a preferred embodiment, the method may further comprise the step of assigning an object ID to said property, for example assigning data of said property to said object ID. For example, each property has a unique object ID. Said ID acts as a key to obtain data about said property. This also allows to monitor the property e.g. data of the property e.g. in case more than one property belonging to one user.

In a preferred embodiment, the method further comprises the step of displaying information about at least some of the method steps. For example, using a display device, for example a computer or a phone screen. For example, the value of the property is displayed on the display device. The calculation is done by a calculation engine, e.g. a computer or a phone.

In a preferred embodiment, the method may further comprise the step of receiving additional parameters about the property, so as to improve the valuation accuracy. For example, the building type and purpose, the size, number of floors, number of rooms. This user may also specify that the building is split into apartments, wherein the valuation of each apartment is shown.

In a preferred embodiment, the method may further comprise the step of assigning a property to a category of similar properties. In an embodiment, the assignment is based on similarities in socio-demographic parameters (e.g. average housing price, gross income of residents). These parameters are preferably retrieved from a database, which can be a database comprising open-source date sets and/or collected data sets, preferably the database comprises collected data sets of previous valuations (value calculations).

In a further embodiment clustering techniques are used to group properties into said categories. Clustering techniques perform grouping of a set of properties in such a way that properties in the same group (called a category or cluster) are more similar (in some sense) to each other than to those in other groups (categories, clusters). Preferably, the clustering techniques are chosen from the list of centroid-based clustering, connectivity-based clustering, distribution-based clustering, grid-based clustering, density-based clustering. In a preferred embodiment, the clustering techniques are based on socio-demographic parameters (e.g. average housing price, gross income of residents), wherein properties with significantly similar socio-demographic parameters are grouped in the same category. In an embodiment, all properties which values have been calculated and are available in a collected data set are assigned to a category by clustering techniques, so as to have a larger comparison base for new properties.

Categories can then correspond to homogeneous zones of similar properties on a country map or regional map (e.g. province map or county map), wherein properties within the same homogeneous zone have similar socio-demographic parameters, but are not necessarily situated in the same neighborhood or in vicinity to each other. In a preferred embodiment, a network of homogeneous zones is created all over a country or region. For example, in Belgium, similarities in socio-demographic parameters are found between properties in Brasschaat, Uccle and Knokke, which are municipalities widely spread over Belgium.

In a preferred embodiment, there are at most 100 homogeneous zones, preferably at most 90, more preferably at most 80, more preferably at most 70, more preferably at most 60, even more preferably at most 50. In another preferred embodiment of the invention, there are at least 10 homogeneous zones, more preferably at least 20, more preferably at least 30, more preferably at least 40, more preferably at least 50. In another embodiment, there are between 10 and 100 homogeneous zones, more preferably between 20 and 80, more preferably between 30 and 70, more preferably between 40 and 60, most preferably about 50.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

In a preferred embodiment, the property is assigned to a category, and thus to a homogeneous zone, after its value has been calculated. Based on its category, in a further embodiment, the property can be placed in its market and the calculated value can be compared with properties from the same homogeneous zone. This way, not only properties in the vicinity are used to find points of comparison, but also properties from the same homogeneous zone, which are possibly located across the country. In another preferred embodiment, the property is assigned to a category, and thus to a homogeneous zone, before the value has been calculated. Based on its category, in a further embodiment, the property can be placed in its market and the value can be calculated based on the value of properties from the same homogeneous zone.

In a second aspect, the present invention relates to a computer product for property valuation, comprising instructions which, when executed by a computer, cause the computer to carry out the computer-implemented method according to the first aspect of the present invention.

In a third aspect, the present invention relates to a computer system for property valuation, configured for performing the computer-implemented method according to the first aspect of the present invention.

In a fourth aspect, the present invention relates to use of the computer implemented method according to the first aspect, for property valuation.

Further characteristics and advantages of embodiments of the present invention will be described with reference to the figure. It should be noted that the invention is not restricted to the specific embodiment shown in the figure, but is only limited by the claims.

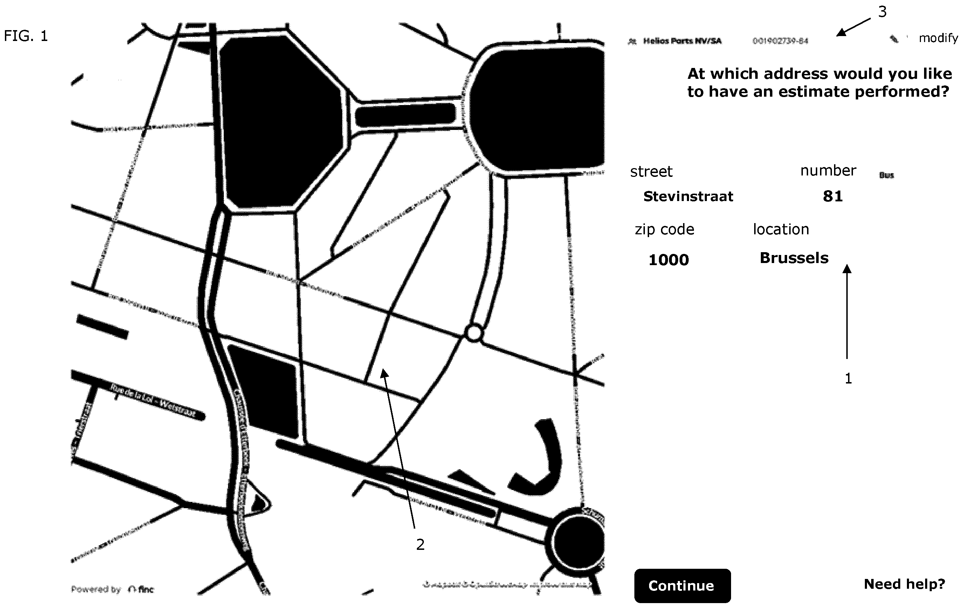

Fig. 1 - 7 illustrate some of the method steps. In Fig. 1, an address (1) of a property (2) is received e.g. the user inserts the address (1) e.g. by accessing a software platform (3) via a computer screen or a phone. For example, the user inserts a street name, a property number, a P.O. box (e.g. bus) number, an area code, and a city name. The address (1) is used to figure out geographical coordinates of the property (2) e.g. via a database or via Google API.

In case the address (1) is found, the property (2), wherein the geo coordinates are located, is selected. Buildings (4) on said property (2) are also selected. A parcel of the property is predefined. If the parcel of the property is linked to another parcel e.g. if the building (4) is located on more than one parcel, then both parcels are selected. The parcel and the corresponding buildings (4) of said property (2) are shown subsequently on an interactive 3D map (5).

In case the address (1) is not found e.g. does not exist in the database, a closest address is located. The geo coordinates of the closest address are used to center the map (4). The user is given the choice to select the parcels and buildings of said closest address.

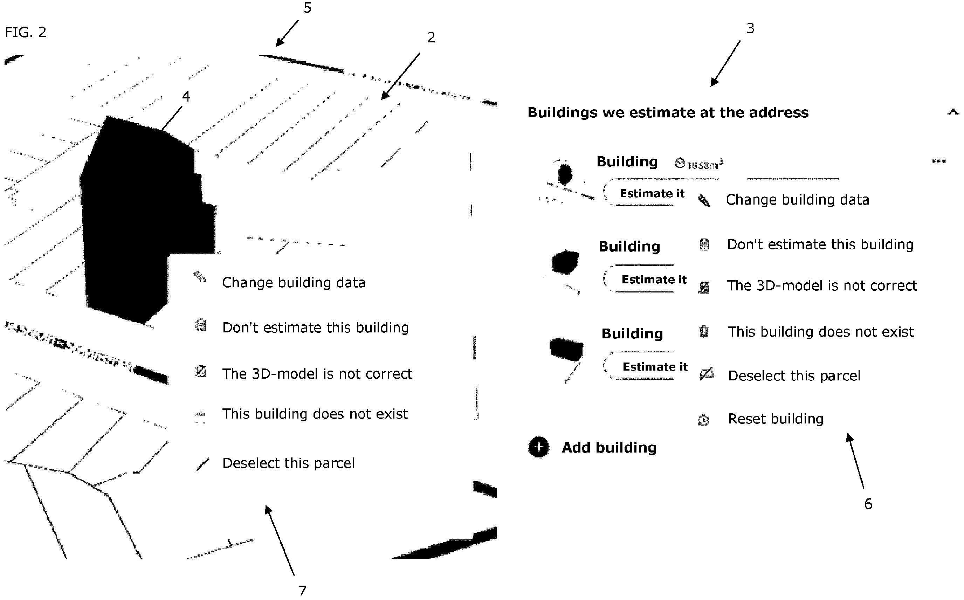

In Fig. 2, the interactive 3D map (5) is shown. The user may select a parcel, after which the corresponding buildings (4) are selected and shown in a list (6). The user may add or remove parcels or corresponding buildings on said map (5) e.g. by clicking thereon (7) or using the list. For example, the user may remove a building (4) that doesn't exist anymore. The user may also rule out certain buildings on the parcel from the valuation calculation. The user may also redefine the parcel of the property. This gives a more accurate valuation of the property (2).

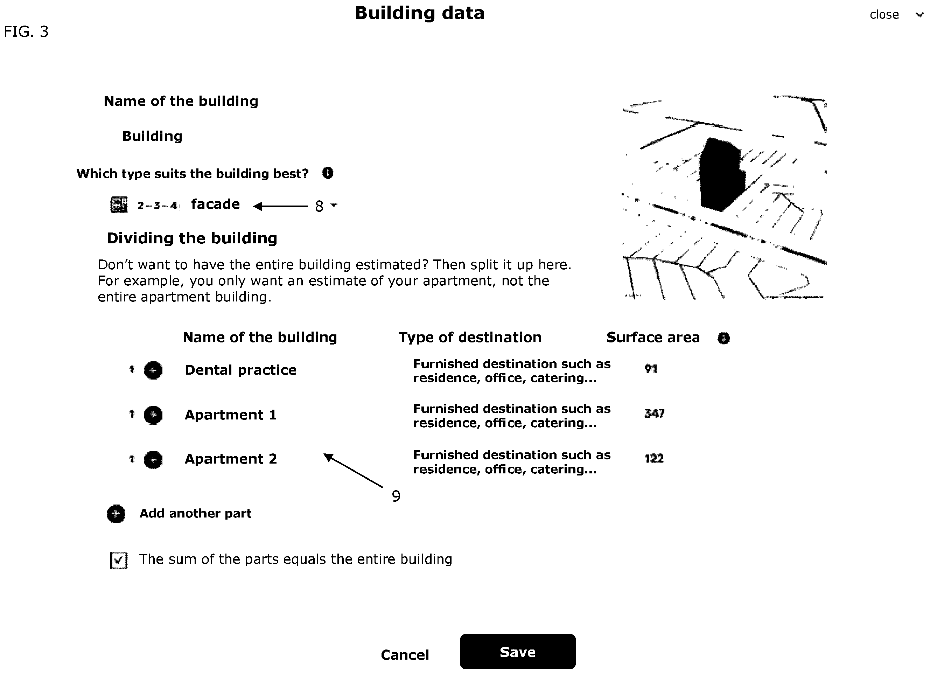

In Fig. 3, the user is asked to add details of buildings (4) on a parcel of a property (2). For example, the type (8), purpose, and size of the building (4). The building (4) may also be split in multiple parts e.g. apartments (9), after which the value of each part e.g. each apartment can be calculated.

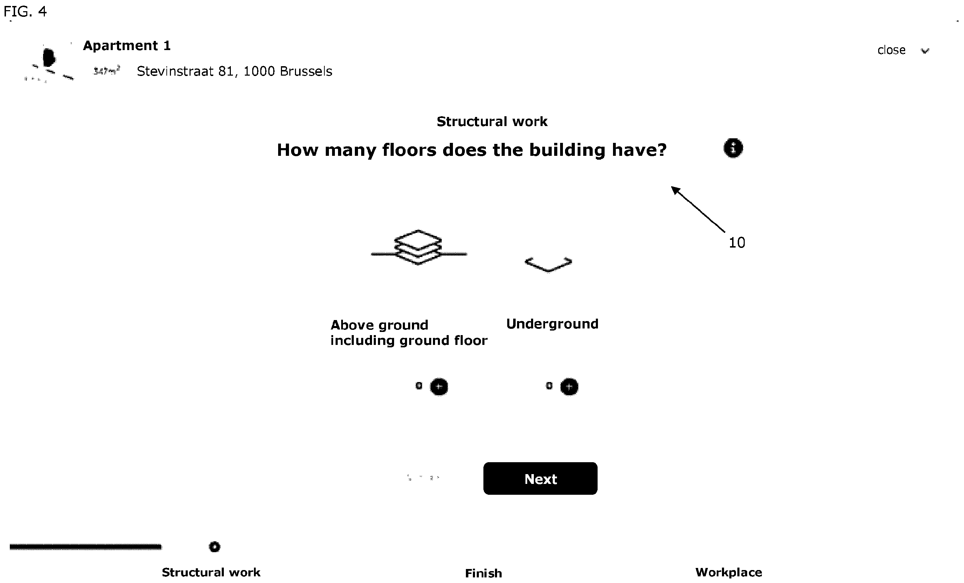

In Fig. 4, prior to calculating a value of the property, a set of questions (10) are asked to the user. For example, questions (10) related to the buildings (4) or part of the buildings (4) on a parcel. This increase the accuracy of the valuation process.

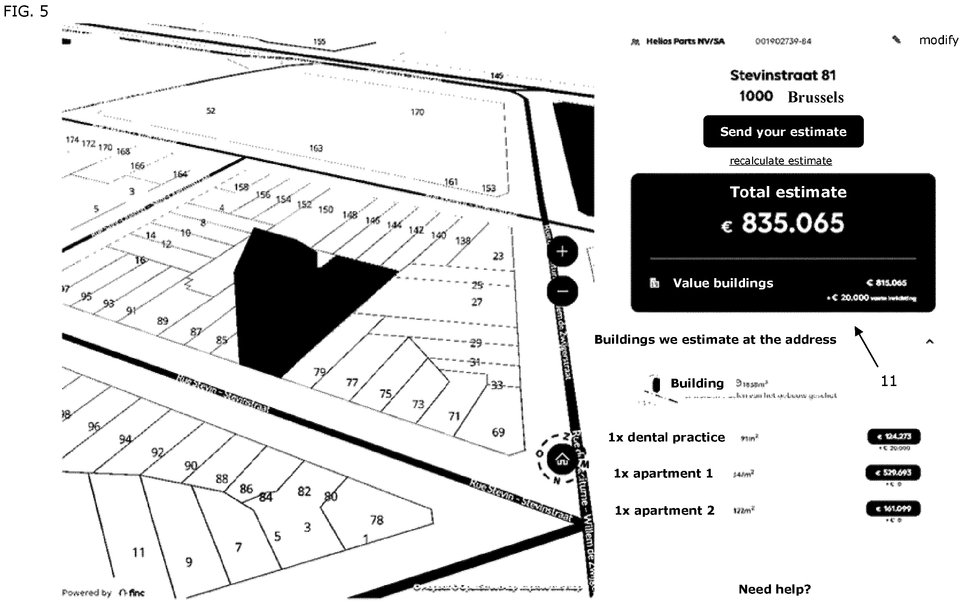

In Fig. 5, a value of the property (2) is calculated (11). For example, the user may select automatic valuation after which the value is immediately shown to the user. A valuation report is created and displayed. For example, a detailed valuation report in PDF is sent to the mailbox of the user.

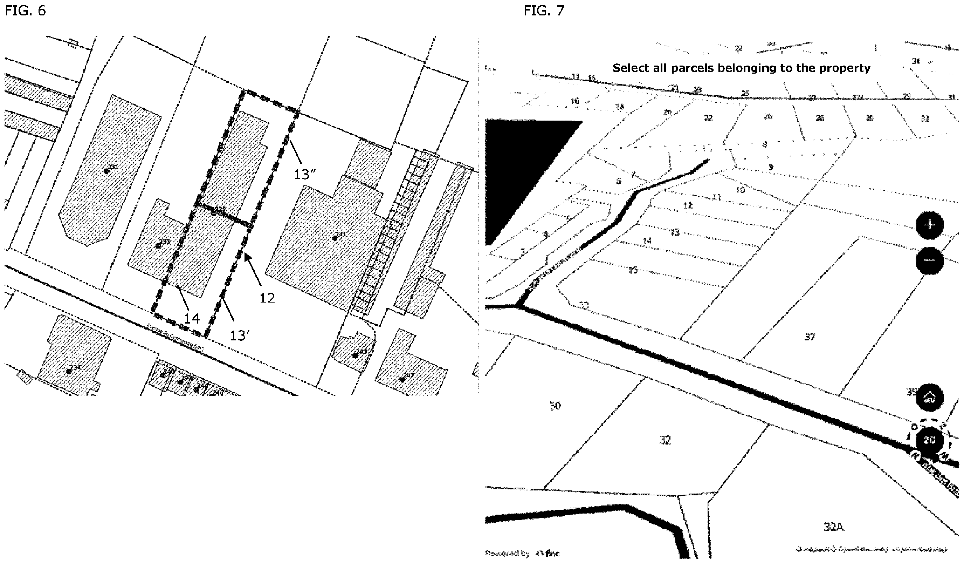

In Fig. 6, an example of the propagation technique is shown, wherein a building (12) is located on two parcels (13', 13"). The method may suggest that these two parcels (13', 13") comprise one property since they share one building (14).

In Fig. 7, a map is shown with a plurality of parcels. The desired parcel of which the value should be calculated may be chosen manually by clicking thereon. The size of these parcels may be altered by the user.

The preceding description gives details of certain embodiments of the present invention. It will, however, be clear that no matter how detailed the above turns out to be in text, the invention may be applied in many ways. It should be noted that the use of certain terminology when describing certain characteristics or aspects of the invention should not be interpreted as implying that the terminology herein is defined again to be restricted to specific characteristics or aspects of the invention to which this terminology is coupled.

## Claims

1. Computer-implemented method for property valuation, comprising the steps of:
a) receiving an address of a property, and
b) locating said property, preferably on an interactive map, **characterized in that** the method further comprises the step of:
c) rendering a 3D visual of said property, wherein said visual is preferably adaptable,
d) calculating a value of the property,
e) pre-defining a parcel comprising said property, and
f) translating the address to a geolocation,
**characterized in that**, the method further comprises the step of:
g) locating a nearest property to said property.

2. Computer-implemented method according to any of the previous claims, wherein the method further comprises the step of linking two or more parcels.

3. Computer-implemented method according to any of the previous claims, wherein the method further comprises the step of redefining or removing the parcel, or adding a new parcel.

4. Computer-implemented method according to any of the previous claims, wherein the method further comprises the step of retrieving at least one data set about the property from at least one database.

5. Computer-implemented method according to claim 4, wherein a first data set comprises open source data, and a second data set comprises collected data.

6. Computer-implemented method according to claims 4 to 5, wherein said data comprises aerial data, and/or detailed descriptions of properties, and/or a detailed description of said property, and/or socio-demographics, and/or neighborhood data, and/or neighboring properties, and/or neighboring parcels.

7. Computer-implemented method according to any of the previous claims, wherein the method further comprises the step of assigning an object ID to said property.

8. Computer-implemented method according to any of the previous claims, wherein the method further comprises the step of receiving additional parameters about the property.

9. Computer-implemented method according to any of the previous claims, wherein the method further comprises the step of assigning a property to a category of similar properties, wherein a category corresponds to a homogeneous zone on a country map or regional map, and wherein properties within the same homogeneous zone have similar socio-demographic parameters.

10. Computer-implemented method according to claim 9, wherein all properties which values have been calculated and are available in a collected data set are assigned to a category by clustering techniques.

11. Computer-implemented method according to claim 9 or 10, wherein there are between 10 and 100 homogeneous zones.

12. Computer-implemented method according to claim 9, 10 or 11, wherein the property is assigned to a category, and thus to a homogeneous zone, after its value has been calculated.

13. Computer program product for property valuation, comprising instructions which, when executed by a computer, cause the computer to carry out the computer-implemented method according to any one of preceding claims 1 to 12.

14. Computer system for property valuation, configured for performing the computer-implemented method according to any one of preceding claims 1 to 12.

15. Use of the computer implemented method according to any of the preceding claims 1 to 12 for property valuation.
